# EUROPÄISCHE PATENTSCHRIFT

(11) **EP 0 481 197 B1**
(45) Veröffentlichungstag und Bekanntmachung des Hinweises auf die Patenterteilung: **15.06.1994**
(21) Anmeldenummer: 91114311.3
(22) Anmeldetag: 26.08.1991
(51) Int. Cl.: B60G 11/46, B62D 61/12

(54) **Luftfederachse**
Axle with pneumatic springs
Essieu à ressorts pneumatiques

(30) Priorität: 13.10.1990 DE 9014233 U
(43) Veröffentlichungstag der Anmeldung: 22.04.1992
(73) Patentinhaber: Bergische Achsenfabrik Fr. Kotz & Söhne, 51674 Wiehl (DE)
(72) Erfinder: Michels, Burchard, Dipl.-Ing., W-5203 Much (DE)
(74) Vertreter: Stenger, Watzke & Ring Patentanwälte

(56) Entgegenhaltungen:
- EP-A- 0 137 953
- WO-A-89/03774
- DE-A- 2 401 242
- FR-A- 1 243 697

## Beschreibung

Die Erfindung betrifft eine Luftfederachse mit großem Achshub, insbesondere für bahntransportierbare Fahrzeuge, mit einem über zwei Lenkerfedern an Lenkerlagern eines Fahrzeugrahmens gelagerten Achskörper, wobei an einem zwischen den beiden am Achskörper gelagerten Lenkerfedern angeordneten und über Schwenklager an dem Fahrzeugrahmen befestigten Luftfederbalgträger mindestens zwei Luftfederbälge abgestützt sind.

Luftfederachsen mit großem Achshub werden insbesondere benötigt, wenn Fahrzeuge sowohl im Straßenverkehr gefahren, als auch auf Eisenbahnanhängern transportiert werden sollen. Praktisch werden solche Luftfederachsen deshalb besonders für Sattelauflieger von Sattelschleppern benötigt, wenn für den Eisenbahntransport sogenannte Eisenbahn-Dollies verwendet werden. Um den Anforderungen bezüglich Ankuppelhöhen und Bodenfreiheit bei einem Bahntransport zu genügen, ist ein Achshub von über 400mm bei gleichzeitiger geringer Bauhöhe der Luftfederung erforderlich.

Aus der DE-OS 24 01 242 ist eine gattungsgemäße Luftfederachse bekannt, deren Luftfederbalgträger an über die Befestigung des Achskörpers hinausgehenden Verlängerungen der Lenkerfeder befestigt sind. Bei dieser vorbekannten Konstruktion ist der Hub des Achskörpers durch die einseitig gelenkige Lagerung der Lenkerfeder geringer als der Hub der Luftfederbälge, so daß relativ große Luftfederbälge für große Achshübe benötigt werden.

Aus der DE-OS 38 32 882 ist bereits eine gattungsgemäße Luftfederachse bekannt, die zwei am Fahrzeugrahmen angelenkte und den Achskörper tragende Lenkerfedern aufweist. An dem Achskörper sind zwei Luftfederbalgträger schwenkbar befestigt, auf deren Hebelarmen jeweils ein Luftfederbalg angeordnet ist, die sich am Fahrzeugrahmen abstützen. Bei dieser bekannten Luftfederachse ist es nachteilig, daß der Lifthub durch die konstruktive Anordnung der Luftfederbalgträger unmittelbar oberhalb der Lenkerfedern eingeschränkt ist. Ferner ist bei dieser Konstruktion die Schwenkbarkeit der Luftfederbalgträger nur auf der der Aufhängung der Lenkerfedern abgewandten Seite nicht eingeschränkt, wogegen die Schwenkbarkeit des dem Lager zugeordneten Hebelarmes der Luftfederbalgträger durch einen Anschlag begrenzt werden muß, um eine Beschädigung der Lenkerfedern zu vermeiden.

Schließlich ist aus der EP-OS 0 137 953 eine Luftfederachse mit einer Achsanhebevorrichtung zum Ausheben des Achskörpers bekannt, die über je eine mit einem Träger verbundene Lenkerfeder und einen ebenfalls am Träger befestigten Stoßdämpfer mit dem Fahrzeugrahmen verbunden ist und die über je zwei an einem zweiarmigen Luftfederbalgträger befestigte Luftfederbälge anhebbar ist. Da der Träger zwischen den beiden Federbälgen und oberhalb des Federbalgträgers liegt, ist auch bei dieser bekannten Achshebevorrichtung der Hub der Achse durch die Bauhöhe des Trägers beschränkt.

Ausgehend von diesem Stand der Technik liegt der Erfindung die **Aufgabe** zugrunde, eine verbesserte Luftfederachse zur Verfügung zu stellen, welche einen möglichst großen Lifthub bei kompakter Konstruktion der Achse hat.

Zur technischen **Lösung** dieser Aufgabe wird eine Luftfederachse gemäß Anspruch 1 vorgeschlagen.

Vorteilhafte weitere Ausgestaltungen der Erfindung sind in den Unteransprüchen gekennzeichnet.

Eine erfindungsgemäße Luftfederachse weist also an zwei Lenkerfedern jeweils zwei Luftfederbälge und somit insgesamt vier Luftfederbälge auf. Bei Druckluftbeaufschlagung der Luftfederbälge sind die Luftfederbalgträger aufgrund der gleich großen und einander entgegengerichteten Drehmomente an den Hebelarmen an einem Schwenken um die Schwenklagerachse gehindert. Bei einem Entlüften der Luftfederbälge werden diese verformt, bis der maximale Hub erreicht ist und der Achskörper fast bis an den Fahrzeugrahmen angehoben bzw. der Fahrzeugrahmen bis fast auf den Achskörper abgesenkt ist. In dieser entlüfteten Stellung liegen zwei Luftfederbälge neben den Lenkerfedern innerhalb des Fahrzeugrahmens.

Ferner kann der Luftfederbalgträger einer erfindungsgemäßen Luftfederachse in beide Richtungen um den Achskörper um einen gleich großen Winkel verschwenkt werden, da die Luftfederbalgträger beim Einfedern der Luftfederachse bzw. beim Liften der Luftfederachse an den Lenkerfedern vorbeigeführt werden.

Bei einer bevorzugten Ausgestaltung sind die Luftfederbälge bezogen auf die Längsachse der Luftfederbalgträger seitlich versetzt angeordnet. Vorzugsweise sind die in Fahrtrichtung hinten angeordneten Luftfederbälge zu den Außenseiten des Rahmens versetzt angeordnet, so daß die Lager der Lenkerfedern und die Kopfplatten der hinteren Luftfederbälge an den Längsträgern des Rahmens befestigt sind. Die beiden in Fahrtrichtung vorne angeordneten Luftfederbälge sind zwischen den Längsträgern des Rahmens an einem daran befestigten Querträger befestigt.

Eine besonders einfache Konstruktion wird dadurch erzielt, daß jedes Schwenklager eine drehfest mit dem Achskörper verbundene Halterung hat, welche schwenkbar an dem Luftfederbalgträger befestigt ist. Bei dieser Konstruktion wird die Schwenkbeweglichkeit zwischen Achskörper und Luftfederbalgträger durch einfache Bolzenverbindungen erzielt. Hierdurch kann auf aufwendige Lagerungen verzichtet werden.

Um die erfindungsgemäße Luftfederachse auch als Liftachse eines Doppel- oder Mehrachsaggregates einsetzen zu können, wird bei einer Weiterentwicklung der Erfindung vorgeschlagen, daß die Luftfederachse eine Achsanhebevorrichtung zum Anheben des Achskörpers hat, die einen schwenkbar am Fahrzeugrahmen angeordneten zweiarmigen Hebel aufweist, welcher am ersten Hebelarm von einer Betätigungsvorrichtung, vorzugsweise einem als Liftbalg ausgebildeten Luftfederbalg mit einer Kraft beaufschlagbar ist und welcher am zweiten Hebelarm eine Laufrolle hat, die auf einer an Achskörper befestigten Führungsbahn rollt.

Bei dieser Weiterentwicklung ist der Luftfederbalg im beladenen Fahrzustand zum Anheben der Achse entlüftet, während die zwischen den Luftfederbalgträgern und dem Fahrzeugrahmen angeordneten Luftfederbälge belüftet sind. Ist das Fahrzeug entladen, so kann eine Achse eines Doppelachsaggregates durch das Belüften des Liftbalges und das Entlüften der zwischen den Luftfederbalgträgern und dem Fahrzeugrahmen angeordneten Luftfederbälge angehoben werden. In dieser Fahrstellung rollt das Fahrzeug lediglich auf einer Achse des Doppelachsaggregats.

Der Liftvorgang erfolgt bei der erfindungsgemäßen Luftfederachse über die am Ende des Trägers angeordnete Rolle, welche auf der Führungsbahn abrollt und den Achskörper in Richtung des Fahrzeugrahmens drückt.

Die erforderlichen Kräfte zum Anheben des Achskörpers werden dadurch verringert, daß die Führungsbahn konkav gekrümmt ist.

Für den Transport auf Schienen-Dollies kann ein Fahrzeug auch an allen Achsen jeweils einen Achslift aufweisen, so daß nach dem Aufsatteln des Fahrzeuges auf die Schienen-Dollies die Luftfederachsen eingezogen werden, um einen ausreichenden Abstand zwischen der Bereifung und den Schienen einzuhalten.

Weitere Einzelheiten und Vorteile des Gegenstandes der Erfindung ergeben sich aus der nachfolgenden Beschreibung der zugehörigen Zeichnungen, die bevorzugte Ausführungsformen einer erfindungsgemäßen Luftfederachse zeigen. In den Zeichnungen zeigen:
- Fig. 1: eine Luftfederachse mit innenliegenden Luftfederbalgtägern in Draufsicht;
- Fig. 2: dieselbe Luftfederachse in einer Fahrstellung im Längsschnitt entlang der Linie II-II;
- Fig. 3: dieselbe Luftfederachse bei abgesenktem Fahrzeugrahmen im Längsschnitt entlang der Linie II-II;
- Fig. 4: eine Luftfederachse mit einer Achsanhebevorrichtung in Draufsicht;
- Fig. 5: dieselbe Luftfederachse gemäß Fig. 4 in abgesenkter Stellung im Längsschnitt entlang der Linie V-V und
- Fig. 6: dieselbe Luftfederachse gemäß den Figuren 4 und 5 in angehobener Stellung im Längsschnitt entlang der Linie V-V.

Die Luftfederachse hat einen Achskörper 1, der mit zwei Lenkerfedern 2 verbunden ist, wobei die Lenkerfedern 2 mit einem Lenkerlager 3 an Trägern 4 gelagert sind. Die Träger 4 sind unterhalb eines Fahrzeugrahmens 5 angeordnet und fest mit diesem verbunden. Der Achskörper 1 ist beidseitig zwischen den Bereifungen 6 an den Lenkerfedern 2 gehalten.

Zum Verbinden des mit einem quadratischen Querschnitt ausgebildeten Achskörpers 1 mit den Lenkerfedern 2 sind an jeder Verbindungsstelle ein oberer Achslappen 7 und ein unterer Achslappen 8 sowie zwei Federbügel 9 und vier Spannschrauben 10 vorgesehen. Der Achskörper 1 ist zwischen dem oberen Achslappen 7 und dem unteren Achslappen 8 verspannt. Die Lenkerfedern 2 hingegen sind zwischen dem oberen Achslappen 7 und den Federbügeln 9 eingeklemmt. Die Verbindung wird durch Anziehen der Spannschrauben 10 hergestellt.

An der dem Fahrzeugrahmen 5 zugewandten Oberseite des Achskörpers 1 ist beidseitig eine Halterung 11 befestigt, die eine Bohrung aufweist. An der Halterung 11 ist eine Haltevorrichtung 12 über einen Bolzen 13 schwenkbar befestigt. Die Haltevorrichtung 12 ist mit einem Luftfederbalgträger 14 verschraubt, der U-förmig ausgebildet ist und an seinen beiden freien Schenkeln 15 jeweils einen Hebelarm 16a und 16b hat.

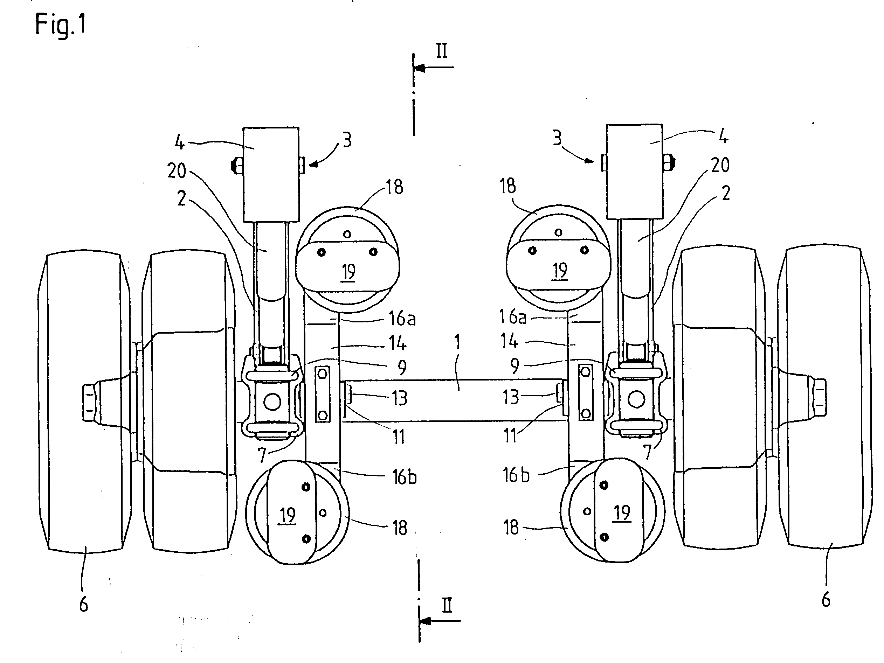

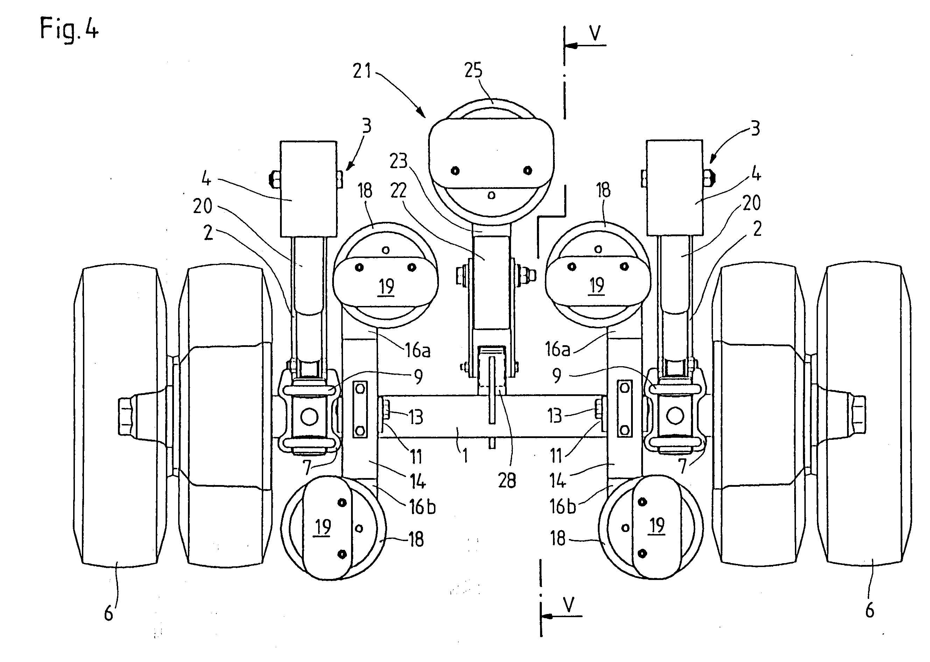

An den Hebelarmen 16a und 16b der Luftfederbalgträger 14 sind zwei identische Luftfederbälge 18 mit Bodenplatten 17 abgestützt. Die Luftfederbälge 18 drücken mit Kopfplatten 19 gegen den Fahrzeugrahmen 5. Wie insbesondere aus den Figuren 1 und 4 entnommen werden kann, sind die Luftfederbälge 18 in Längsrichtung des Fahrzeugrahmens 5 versetzt angeordnet. Die beiden neben den Lenkerfedern 2 angeordneten Luftfederbälge drücken mit ihren Kopfplatten 19 gegen einen in den Zeichnungen nicht dargestellten, zwischen den Längsträgern des Fahrzeugrahmens 5 angeordneten Querträger, wogegen die beiden anderen Luftfederbälge 18 mit ihren Kopfplatten 19 direkt an den Längsträgern des Fahrzeugrahmens 5 befestigt sind.

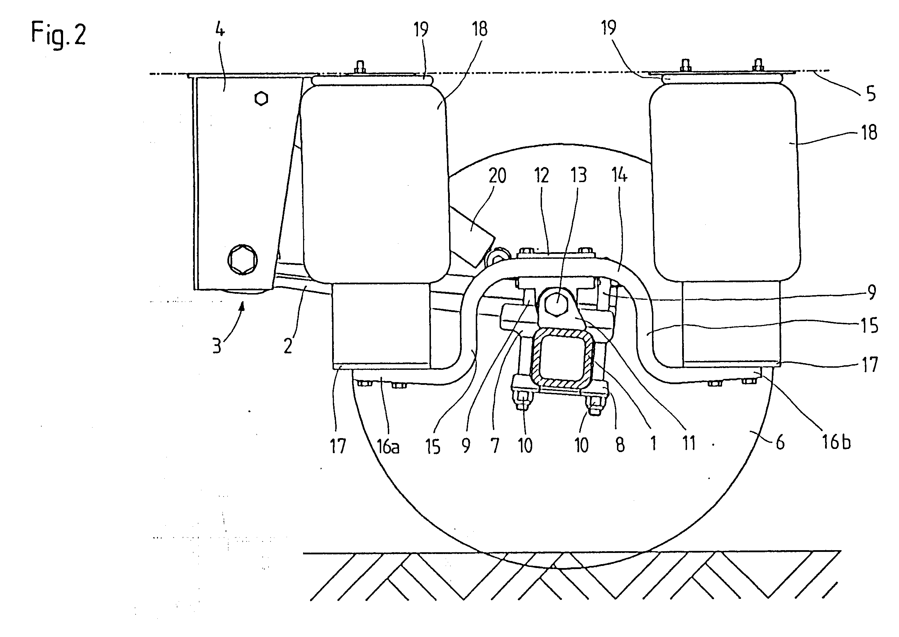

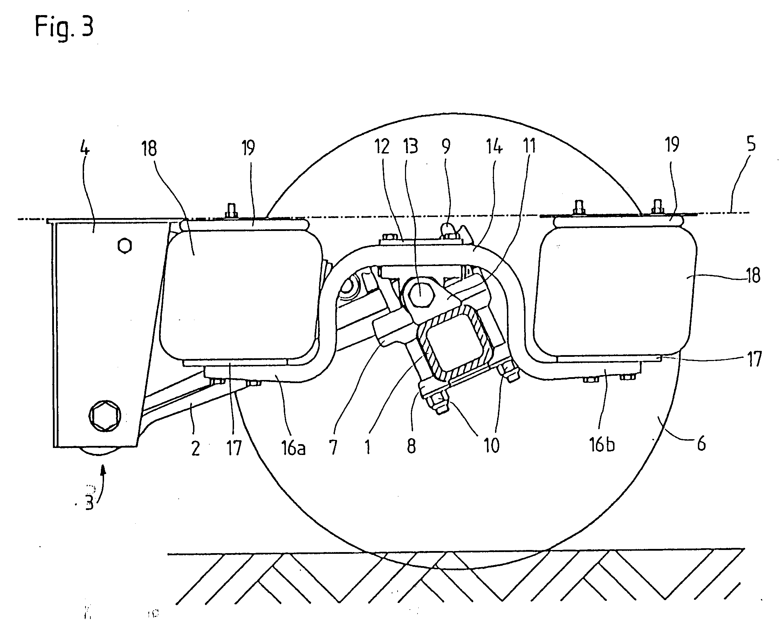

Bei der in Fig. 2 dargestellten Fahrstellung sind die Luftfederbälge 18 mit Druckluft beaufschlagt. Die Federung der Druckluftachse erfolgt über die Druckluftfederbälge 18 sowie einen Stoßdämpfer 20. Wie in der Fig. 3 dargestellt ist, werden die Luftfederbälge 18 durch Entlüften und das Gewicht des Fahrzeugrahmens 5 zusammengedrückt. Hierdurch wird das ganze Fahrzeug um einen Achshub von ca. 400mm abgesenkt. Der Luftfederbalgtäger 14 ist in dieser Stellung fast bis an den Fahrzeugrahmen 5 herangerückt. Der Achskörper 1 wird bei dem Absenken des Fahrzeugrahmens um das Lenkerlager 3 geschwenkt, so daß auch die Halterung 11 und der daran befestigte Achskörper 1 um den Bolzen 13 der Haltevorrichtung 12 geschwenkt wird.

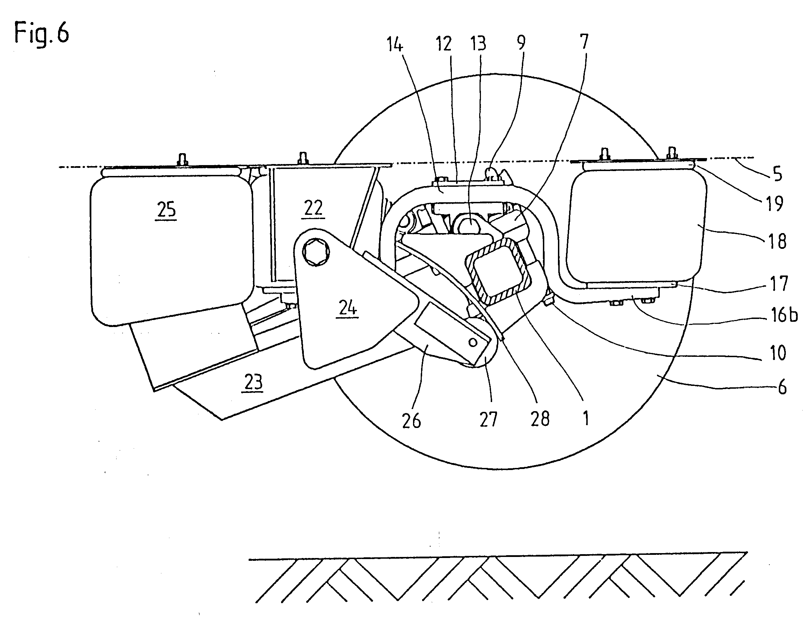

Bei der in den Figuren 4 bis 6 dargestellten zweiten Ausführungsform der Luftfederachse ist diese mit einer Achsanhebevorrichtung 21 ausgerüstet. Die Achsanhebevorrichtung 21 hat eine am Fahrzeugrahmen 5 befestigte Konsole 22, an die ein zweiseitiger Hebel 23 über zwei mittig an dem Hebel 23 befestigte Bleche 24 schwenkbar gelagert ist. Der Hebel 23 ist auf einer Seite über einen Luftfederbalg 25 am Fahrzeugrahmen 5 abgestützt. An seinem zweiten Ende weist der Hebel 23 eine U-förmige Führung 26 auf, in der eine Rolle 27 drehbar gelagert ist.

Die Rolle 27 läuft auf einer konkav gekrümmten Führungsbahn 28, welche mittig am Achskörper 1 befestigt ist.

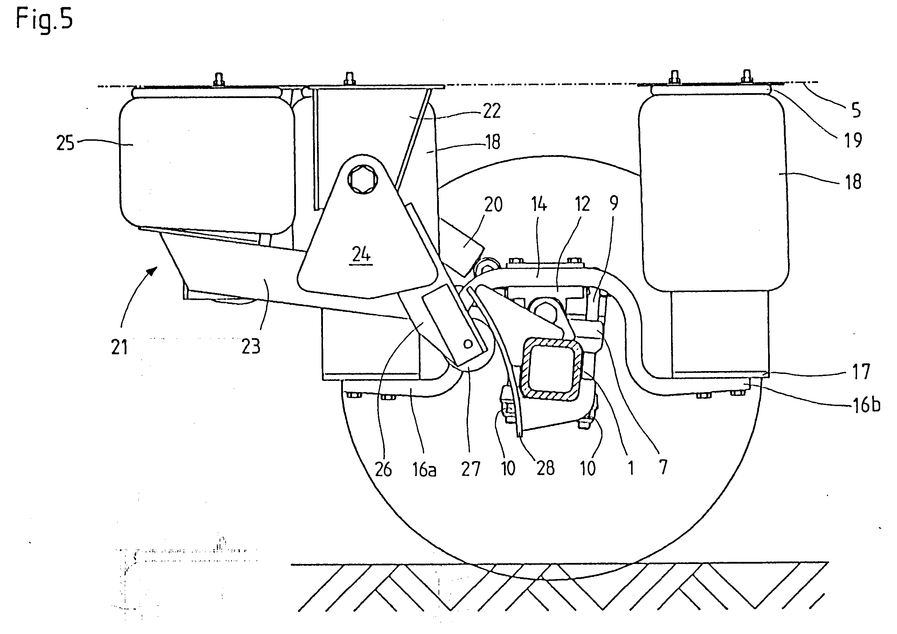

In der Fig. 5 ist diese zweite Ausführungsform der Luftfederachse in der Fahrstellung dargestellt. In dieser Fahrstellung ist der Luftfederbalg 25 entlüftet und die zwischen den Luftfederbalgträgern 14 und dem Fahrzeugrahmen 5 angeordneten Luftfederbälge 18 belüftet. Soll die bei einem Doppel- bzw. Mehrachsaggregat verwendete Luftfederachse angehoben werden, wie es beispielsweise bei Leerfahrten des Fahrzeuges üblich ist, so wird der Luftfederbalg 25 be- und die Luftfederbälge 18 entlüftet, so daß der Hebel 23 um seinen an der Konsole 22 angeordneten Schwenkpunkt verschwenkt wird und die auf der Führungsbahn 28 geführte Rolle 27 den Achskörper 1 anhebt.

In gleicher Weise ist es auch möglich, alle Achsen eines Fahrzeuges zum Transport auf Eisenbahn-Dollies anzuliften. Dabei werden die Luftfederachsen so weit abgesenkt, daß der Fahrzeugrahmen 5 auf einem untergeschobenen Eisenbahn-Dollie aufliegt. Anschließend werden die Luftfederbälge 25 be- und die Luftfederbälge 18 entlüftet, so daß die Achsen an den Fahrzeugrahmen 5 herangezogen werden, um einen ausreichenden Abstand zwischen der Bereifung 6 und den Schienen zu gewährleisten.

## Patentansprüche

1. Luftfederachse mit großem Hub, insbesondere für bahntransportierbare Fahrzeuge, mit einem über zwei Lenkerfedern (2) an Lenkerlagern (3) eines Fahrzeugrahmens (5) gelagerten Achskörper (1), wobei an einem zwischen den beiden am Achskörper (1) gelagerten Lenkerfedern (2) angeordneten und über Schwenklager (11, 12) an dem Fahrzeugrahmen (5) befestigten Luftfederbalgträger (14) mindestens zwei Luftfederbälge (18) abgestützt sind,
**dadurch gekennzeichnet,**
daß mindestens zwei Luftfederbalgträger (14) vorgesehen sind und daß die Luftfederbälge (18) bezogen auf die Längsachse der Luftfederbalgträger (14) seitlich versetzt vorne zwischen den Lenkerfedern (2) und hinten hinter den Lenkerfedern (2) angeordnet sind.

2. Luftfederachse nach Anspruch 1, dadurch gekennzeichnet, daß jedes Schwenklager eine drehfest mit dem Achskörper verbundene Halterung (11) hat, welche schwenkbar an dem Luftfederbalgträger (14) befestigt ist.

3. Luftfederachse nach einem der Ansprüche 1 oder 2, mit einer Achsanhebevorrichtung (21) zum Anheben des Achskörpers (1), die einen schwenkbar am Fahrzeugrahmen (5) angeordneten zweiarmigen Hebel (23) hat, welcher am ersten Hebelarm von einer Betätigungsvorrichtung, vorzugsweise einem Luftfederbalg (25) mit einer Kraft beaufschlagbar ist,
**dadurch gekennzeichnet,**
daß am zweiten Hebelarm eine Rolle (27) angeordnet ist, die auf einer am Achskörper (1) befestigten Führungsbahn (28) rollt.

4. Luftfederachse nach Anspruch 3, dadurch gekennzeichnet, daß die Führungsbahn (28) konkav gekrümmt ist.

## Claims

1. Air spring axle with a large travel, particularly for vehicles which can be transported by rail, with an axle body (1) supported on link bearings (3) of a vehicle chassis (5) via two link springs (2), at least two air spring bellows (18) being supported on an air spring bellows support (14) which is arranged between the two link springs (2) mounted on the axle body (1) and secured on the vehicle chassis (5) by means of pivot bearings (11, 12), characterized in that at least two air spring bellows supports (14) are provided, and in that, relative to the longitudinal axis of the air spring bellows supports (14), the air spring bellows (18) are arranged in a laterally offset position at the front between the link springs (2) and at the rear behind the link springs (2).

2. Air spring axle according to Claim 1, characterized in that each pivot bearing has a mounting (11) which is connected in a rotationally fixed manner to the axle body and is secured pivotably on the air spring bellows support (14).

3. Air spring axle according to either of Claims 1 and 2, with an axle-raising device (21) for raising the axle body (1), which device has a two-armed lever (23) which is arranged pivotably on the vehicle chassis (5) and can be subjected to a force on the first lever arm by an actuating device, preferably an air spring bellows (25), characterized in that a roller (27) which rolls on a guide track (28) secured on the axle body (1) is arranged on the second lever arm.

4. Air spring axle according to Claim 3, characterized in that the guide track (28) has a concave curvature.

## Revendications

1. Essieu à ressorts pneumatiques possédant un grand débattement, en particulier pour des véhicules transportables par voie ferrée, comprenant un corps d'essieu (1) monté sur des paliers de bras oscillant (3) d'un châssis de véhicule (5) par l'intermédiaire de deux ressorts (2) formant bras oscillants, au moins deux soufflets à air (18) prenant appui sur un support de soufflets à air (14) qui est disposé entre les deux ressorts (2) formant bras oscillants montés sur le corps d'essieu (1) et qui est fixé au châssis (5) du véhicule par l'intermédiaire de paliers de pivotement (11, 12), caractérisé en ce qu'il est prévu au moins deux supports de soufflets à air (14), et en ce que, par rapport à l'axe longitudinal des supports de soufflets à air (14), les soufflets à air (18) sont déportés latéralement, à l'avant, entre les ressorts formant bras oscillants (2) et, à l'arrière, derrière les ressorts (2) formant bras oscillants.

2. Essieu à ressorts pneumatiques selon la revendication 1, caractérisé en ce que chaque palier de pivotement possède un dispositif porteur (11) qui est solidarisé en rotation avec le corps d'essieu et qui est monté pivotant sur le support de soufflets à air (14).

3. Essieu à ressorts pneumatiques selon l'une des revendications 1 ou 2, comprenant, pour lever le corps d'essieu (1), un dispositif de soulèvement d'essieu (21) muni d'un levier (23) à deux bras qui est monté pivotant sur le châssis (5) du véhicule et dont le premier bras de levier peut être sollicité par une force à l'aide d'un dispositif d'actionnement, de préférence à l'aide d'un soufflet à air (25), caractérisé en ce que, sur le second bras de levier est monté un galet (27) qui roule sur une piste de guidage (28) fixée au corps d'essieu (1).

4. Essieu à ressorts pneumatiques selon la revendication 3, caractérisé en ce que la piste de guidage (28) présente une courbure concave.
